(19) Europäisches Patentamt

European Patent Office

Office européen des brevets

(11) Veröffentlichungsnummer: **0 378 085 B1**

(12) **EUROPÄISCHE PATENTSCHRIFT**

(45) Veröffentlichungstag der Patentschrift: **20.07.94**

(21) Anmeldenummer: **90100064.6**

(22) Anmeldetag: **03.01.90**

(51) Int. Cl.5: **H02P 9/42**, F02G 5/02, H02P 9/04

㊴ **Abgasturbinen-Generatoranlage.**

(30) Priorität: **11.01.89 DE 3900612**

(43) Veröffentlichungstag der Anmeldung:
**18.07.90 Patentblatt 90/29**

(45) Bekanntmachung des Hinweises auf die Patenterteilung:
**20.07.94 Patentblatt 94/29**

(84) Benannte Vertragsstaaten:
**CH DE DK FR IT LI**

(56) Entgegenhaltungen:
**EP-A- 0 056 710**
**EP-A- 0 073 088**
**EP-A- 0 166 175**
**EP-A- 0 257 385**
**DE-A- 3 705 310**

(73) Patentinhaber: **STN Systemtechnik Nord GmbH**
**Postfach 10 12 40**
**D-28012 Bremen(DE)**

(72) Erfinder: **Heinemann, Jörg, Dipl.-Ing.**
**Drosselweg 9a**
**D-2060 Bad Oldesloe(DE)**
Erfinder: **Lösekann, Wolfgang, Dipl.-Ing.**
**Autal 1**
**D-2000 Wedel(DE)**
Erfinder: **Kranert, Klaus, Dr.-Ing.**
**Marschweg 34**
**D-2000 Hamburg 56(DE)**

(74) Vertreter: **Eisenführ, Speiser & Partner**
**Martinistrasse 24**
**D-28195 Bremen (DE)**

## Beschreibung

Die Erfindung betrifft eine Abgasturbinen-Generatoranlage gemäß dem Oberbegriff von Anspruch 1.

Eine derartige, aus der DE-OS 37 05 310 bekannte Generatoranlage weist einen selbsterregten Synchrongenerator auf, der in das Netz speist und bei Lastabfall durch einen Bremswiderstand belastet wird. Bei dieser Anlage besteht die Notwendigkeit eines teuren Anwurfmotors. Außerdem bedeutet jede Netzstörung ein Absetzen und Wiederstarten der Abgasturbinen, wobei die stoßartige Netzbelastung durch den Anwurfmotor und deren ständige Reibungs- und Lüfterverluste nachteilig sind. Weiterhin ist ein Betrieb nicht mehr möglich, wenn ein Schiffsbetriebszustand vorliegt, bei dem die Turboeigenleistung größer ist als die Bordnetzbedarfsleistung.

Der Erfindung liegt die Aufgabe zugrunde, bei einer Abgasturbinen-Generatoranlage der eingangs genannten Art unter Vereinfachung der Anlage und Minderung der Anlagenkosten die Energieeinsparung durch den Abgasturbinengenerator zu optimieren.

Die Aufgabe wird erfindungsgemäß durch die kennzeichnenden Merkmale von Anspruch 1 gelöst.

Ein Vorteil der Erfindung liegt in der unterbrechungslosen Stromversorgung bei kurzzeitigen Kurzschlüssen. Weiterhin ist vorteilhafterweise eine Einspeisung in das Bordnetz dann möglich, wenn die um die Minimalleistung der Dieselgeneratoren verringerte Bordnetzleistung geringer ist als die Abgasturbinenleistung.

Ausgestaltungen der Erfindung sind in den Unteransprüchen 2 bis 6 beschrieben.

Die erfindungsgemäßen Ausgestaltungen ermöglichen für den Schiffsbetrieb vorteilhafterweise, daß bei längeren Seetörns und Vollastfahrt der Hauptmaschinen das Bordnetz allein vom Turbinengenerator gespeist werden kann, die Wartungsintervalle für die Hilfsdiesel erheblich vergrößert werden können und nur geringe Energie der Abgasturbine in den Heizwiderständen vernichtet werden muß.

In der Zeichnung ist ein Ausführungsbeispiel nach der Erfindung dargestellt, und zwar zeigt:

Fig.1 ein Schaltbild einer Abgasturbinen-Generatoranlage mit einem fremderregten Synchrongenerator,

Fig.2 einen Ausschnitt der Anlage aus Fig.1, die zusätzlich eine Wellengeneratoranlage mit Frequenzumrichter aufweist, und

Fig.3 ein Diagramm zur Darstellung der Hochlaufregelung an zwei Punkten einer Turbinenkennlinie.

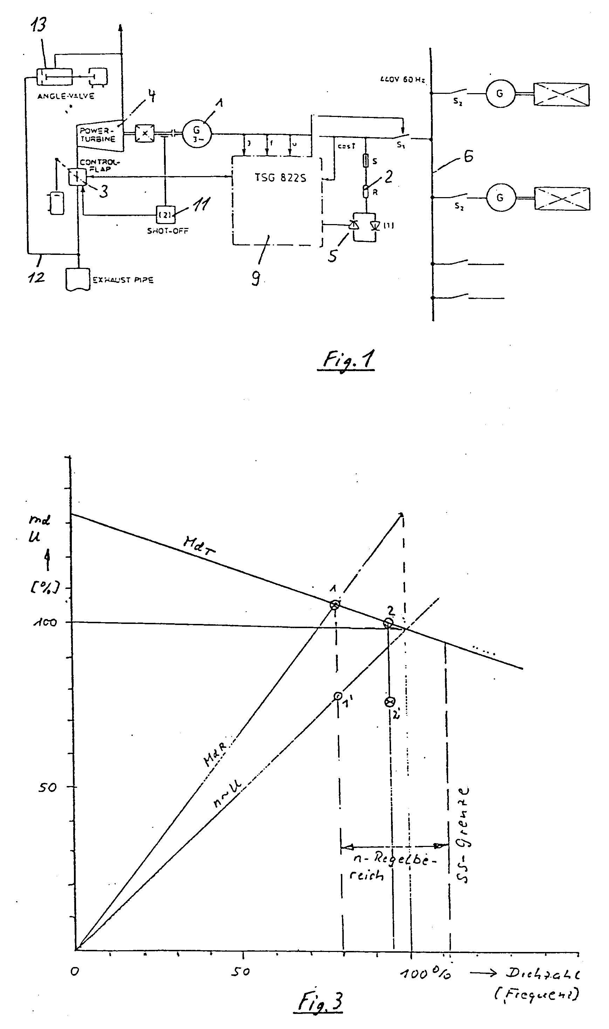

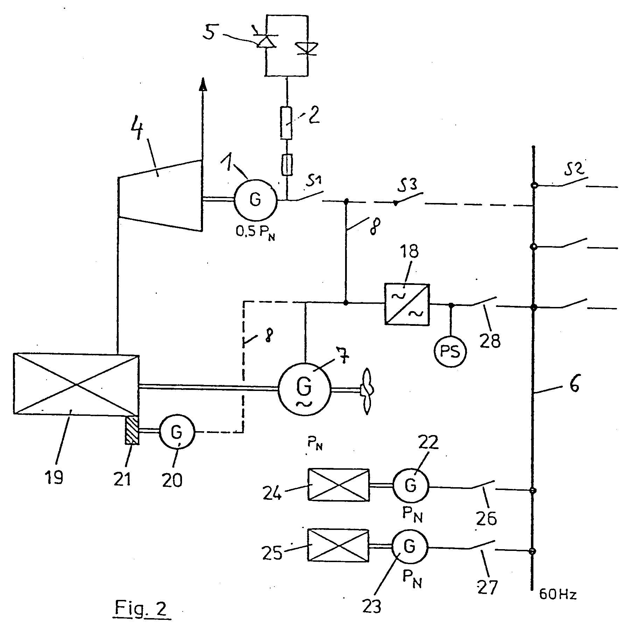

Gemäß Fig.1 wird ein Teil der Abgase eines zeichnerisch nicht dargestellten Dieselmotors über eine Rohrleitung einer Nutzturbine (4) zugeführt, deren Schaufelwelle über ein Untersetzungsgetriebe mit der Welle eines fremderregten Synchrongenerators (1) mechanisch verbunden ist, beispielsweise ein Synchrongenerator mit Permanent-Magnet-Erregung. Die im Betriebsfall erzeugte elektrische Leistung gelangt über eine Sammelschiene und einen geschlossenen Netzschalter (S1) in ein Netz (6), Inselnetz, vorzugsweise Schiffsbordnetz, oder auf einen Synchronwellengenerator (vgl. Fig.2).

Das An- bzw. Hochfahren des Synchrongenerators (1) bzw. der Nutzturbine (4) erfolgt bei einer geöffneten Abgasklappe (3), die in der Rohrleitung angeordnet ist und von einem Ablaufsteuergerät (9) Stellsignale erhält. Das Ablaufsteuergerät (9) erhält von der Sammelschiene Istwerte des Stromes, der Spannung, der Frequenz und des cos φ und gibt auch Stellsignale an den Netzschalter (S1) in Abhängigkeit von deren Iststellungen weiter. Auch kann es ein Steuersignal zur Schaltung eines Belastungswiderstandes (2) an eine Antiduktorschaltung (5) mit Thyristoren abgeben. Der Antiduktorschaltung (5) kann alternativ auch ein externes Steuersignal zugeführt werden.

Ein zusätzliches Sicherheitsgerät (11) erfaßt meßtechnisch eine Überdrehzahl an der Nutzturbine (4) oder am Untersetzungsgetriebe. Ist eine Überdrehzahl vorhanden, so löst das Sicherheitsgerät (11) unverzüglich einen Schnellschluß einer Schnellschlußklappe aus, die ebenso wie die Abgasklappe (3) in der Rohrleitung 1 angeordnet ist. Beide Klappen weisen lediglich zwei Betriebsstellungen auf, nämlich die Betriebsstellungen "geöffnet" oder "geschlossen".

Ein zu der Nutzturbine (4) und der Abgas- bzw. Schnellschlußklappe parallel liegender Bypaß 12 wird mittels eines Eckventils (13) bei allen Klappenzusteuerungen geöffnet. Hierdurch wird die Nutzturbine (4) durch Herabsetzung der auf sie einwirkenden Kräfte mechanisch geschont.

Die in Fig.2 dargestellte Anlage weist neben dem fremderregten Synchrongenerator (1) einen Synchronwellengenerator (7) auf, wobei beide Generatoren zusammengeschaltet sind und gemeinsam zur Netzversorgung in einen Frequenzumrichter (18) einspeisen. Auch kann eine Einspeisung in das Netz (6) über einen weiteren Netzschalter (S3) erfolgen. Der Frequenzumrichter (18) ist über einen Netzschalter (28) an das Netz (6) angeschlossen. Der Synchronwellengenerator (7) wird von einem Dieselmotor (19) angetrieben, der auch die Abgase für die Nutzturbine (4) bereitstellt. Alternativ zu der üblichen, vollausgezeichneten Wellengeneratoranlage kann ein Generator (20) vorgesehen sein, der mit dem Dieselmotor (19) über ein Getriebe (21) mechanisch ver-. bunden ist. Diese Alternativlösung ist gestrichelt dargestellt.

In das Netz (7) speisen über Netzschalter (26 und 27) zwei weitere Generatoren (22 und 23), die von Dieselmotoren (24 und 25) angetrieben werden, elektrische Leistung ein. Die Nennleistung dieser Generatoren kann z.B. doppelt so groß sein wie diejenigen des Synchrongenerators (1) und des Synchronwellengenerators (7). Die Wellengeneratoranlage ist mindestens in der Leistungsgröße des Synchrongenerators (1) dimensioniert. Der Frequenzumrichter (18) ist in der Leistungsgröße dimensioniert, die leistungsmäßig für einen Bordnetz-Seebetrieb ausreicht. Weiterhin weisen der Synchrongenerator (4) und der Wellengenerator (17) eine U/f = Konstant-Regelung und eine niedrigere Nennfrequenz als das Bordnetz auf. Die Frequenzregelung und unterlagerte Leistungsregelung des Frequenzumrichters (18) kann durch einen gestellten Gleichrichter erfolgen, der zwischen den Generatoren (1 bzw. 7) und dem Wechselrichter des Frequenzumrichters (18) angeordnet ist. Bei einer Systemstörung der obenbeschriebenen Art oder einem sonstigen Lastabfall wird der gestellte Gleichrichter dicht gefahren.

Unter Hinweis auf das in **Fig.3** dargestellte Diagramm wird die Funktionsweise der erfindungsgemäßen Anlagen nachstehend erläutert. Nach Erregung des Synchrongenerators (1) mit Nennerregung und nach vollen Durchzünden des Antiduktors wird die Abgasklappe (3) des Abgaskanales aufgefahren. Der Netzschalter (S1) ist geöffnet. Der Belastungswiderstand (2) ist z.B. für eine Widerstandswert von 0.75 Xn ausgelegt, wobei Xn die Nennreaktenz des Synchrongenerators (1) ist. Die Turbine (4) wird beschleunigt und läuft gegen das Belastungsdrehmoment hoch. Hierbei ist:

$$Md_{Last} = Md_{Gen} = \phi \times I$$
$$I = U/R$$
$$U \sim n \text{ , da } \phi = \text{konst.}$$
$$Md = n/R = U/R$$

Ungeregelt erreicht die Turbine (4) Punkt 1 bei einer Drehzahl von ca. 80 % nn mit Ml = Mr = 0.8 : 0.75≈1.07. Anschließend setzt die Frequenzregelung ein, die durch Anschnittsteuerung des Antiduktors (5) den Strom und damit das Drehmoment der Last verringert. Bei Pkt 2′ mit u = 0.77 ergibt sich Ml = 0.77 : 0.75 = 1.027 und damit n≈95 % bei Pkt 2.

Mit Erreichen der Netzfrequenz wird durch ein Steuergerät (9) der Turbogenerator (1) zum Netz zusynchronisiert. Anschließend wird der Antiduktor (5) zeitverzögert zugesteuert, so daß eine allmähliche Lastübergabe an das Netz (6) erfolgen kann.

Im allgemeinen läuft im Inselnetz (6) an Bord eines Schiffes nur ein Dieselmotor parallel zum Turbogenerator (1). Bei erhöhtem Leistungsaufkommen am Turbogenerator (1) oder bei verminderter Bordnetzlast muß sichergestellt sein, daß der Dieselmotor wegen Verkokungsgefahr nicht unter 25 % Last gefahren wird. In diesem Fall wird über die Antiduktorsteuerung (5) die überschüssige Energie im Belastungswiderstand (2) verheizt.

Bei Kurzschluß oder "blackout" im Netz (6) wird der Netzschalter (S1) (**Fig.1**) sofort durch Unterspannung ausgelöst. Das Steuergerät (9) gibt darauf die letzte Istfrequenz, die vor der Störung vorhanden war, als Sollfrequenz an den Frequenzregler, der über den Antiduktor (5) eine derartige Belastung vorgibt, daß die Frequenz gehalten wird. Sobald die Spannung im Netz (6) wieder aufgebaut ist, wird durch das Steuergerät (9) der Turbogenerator (1) wieder auf das Netz (6) synchronisiert. Damit erhält man eine maximale Energieausbeute aus dem Turbogenerator (1). Steht bei die Störung länger an, wird bei eingeschaltetem Widerstand (2) durch Klappenschließung die Turbine (6) abgesetzt.

Ist nach **Fig.2** ein Getriebewellengenerator (20) über ein Kabel (8) und einen Netzschalter (S1) mit dem Turbogenerator (1) verbunden, so erfolgt der normale Anfahr- und Absetzvorgang des Turbogenerators (1) wie für **Fig. 1** beschrieben.

Bei Störfällen wird am Netzschalter (S3) entschieden, ob es Netz-. störungen oder interne Störungen, d. h. zwischen Turbo- und Wellengenerator sind. Bei Netzstörungen wird der Netzschalter (S3) mit geringster Zeitverzögerung geöffnet, während der Netzschalter (S1) geschlossen bleibt, so daß der Turbogenerator (1) seine Leistung auf den Wellengenerator (7) abgibt, der als Motor zusätzlich den Schiffspropeller antreibt. Nach Störungsbeseitigung wird über den Netzschalter (S3) wieder zum Netz (6) zusynchronisiert. Interne Störungen veranlassen die unverzögerte Öffnung des Netzschalters (S1) und zeitverzögertes Öffnen vom Netzschalter (S3), wenn der Fehler vom Wellengenerator (7) kommt. Lag der Fehler beim Turbogenerator (1), arbeitet der Wellengenerator (7) nach dem Öffnen vom Netzschalter (S1) weiterhin mit Leistungsabgabe in das Bordnetz (6). Somit ist der Schiffsbereich optimal geschützt.

Eine andere Anlagenstruktur ergibt sich nach **Fig.2**, wenn ein Wellengenerator (7) mit dem Turbogenerator (1) über den Netzschalter (S1) verbunden ist und beide gemeinsam über einen Frequenzumrichter (18) und Schalter (28) auf ein Netz (6) speisen. Hierbei übernimmt bei Netzstörungen der Umrichter (18) die Trennung des Turbo-Wellengeneratorverbundes vom Netz (6), ohne daß der Netzschalter (S1) den Turbogenerator (1) abschaltet. Der Umformer kann diese Trennung durch Sperren des Gleichrichters oder des Wechselrichters erreichen.

Steht die Störung weiterhin an, so wird anschließend der Netzschalter (S1) den Turbogenerator (1) vom System trennen. Mit dieser Anlagenstruktur kann die Abgasenergie wahlweise für das Bordnetz oder für die Propulsion genutzt werden.

**Patentansprüche**

1. Abgasturbinen-Generatoranlage für Dieselmotoren (19), insbesondere für Schiffsdieselmotoren mit oder ohne Wellengenerator (7) sowie für kombinierten Wellengenerator-Motor- und Generatorbetrieb mit oder ohne frequenzentkoppelte Umrichter (18), wobei ein überschüssiger,vorzugsweise ein einem Hochleistungs-Turbolader nicht zugeführter Teil der Dieselmotorabgase einer Nutzturbine (4) zugeführt wird, die über Untersetzungsgetriebe einen Synchrongenerator (Turbogenerator) (1) antreibt, der über einen Netzschalter (51) die Energie in ein Netz (6) oder auf einen Synchronwellengenerator (7) des Dieselmotors (19) einspeist, und wobei ein über einen Antiduktor (5) ansteuerbarer Widerstand (2) zur Belastung des Turbogenerators (1) bei Lastausfall des Netzes (6) vorgesehen ist bevor Abgasklappe (3) zugefahren wird, dadurch gekennzeichnet, daß der Synchrongenerator fremderregt (1) ist, daß der Belastungswiderstand (2) so dimensioniert ist, daß er kleiner als die Nennreaktanz des Turbogenerators (1) ist, daß vor dem Anfahren der Turbine (4) und Öffnen der Abgasklappe (3) der Generator erregt, der Antiduktor (5) gezündet und der Netzschalter (S1) geöffnet ist, daß nach dem Öffnen der Abgasklappe (3) mit einer Frequenzregelung und Stellung des Belastungsstroms im Belastungswiderstand (2) durch den Antiduktor (5) die Frequenz des Turbogenerators (1) an die des Inselnetzes oder eines Wellengenerators herangefahren und über den Netzschalter (S1) zusynchronisiert wird sowie eine Wirklastübergabe an das Netz (6) durch Zufahren des Antiduktors (5) erfolgt, daß bei vorrübergehende Schalterauslösung infolge Netzstörungen durch die Einschaltung des Antiduktors (5) und der Frequenzregelung die Frequenz gehalten wird, und daß nach Beseitigung der Netzstörungen eine Wiederzusynchronisierung erfolgt.

2. Abgasturbinen-Generatoranlage nach Anspruch 1, dadurch gekennzeichnet, daß bei einem Inselnetz (6) mit Dieselgeneratoren (22, 23) eine minimale Auslastung der zugehörenden Dieselmotoren (24, 25) dadurch gewährleistet wird, daß bei Unterschreitung einer Minimallastgrenze der Dieselgeneratoren (22, 23) die überschüssige Energie des Turbogenerators (1) durch Ansteuerung des Antiduktors (5) in den Belastungswiderstand (2) verheizt wird.

3. Abgasturbinen-Generatoranlage nach Anspruch 1 oder 2, wobei die Bordnetzlast sich ständig unterhalb der erzeugten Turbogeneratorlast befindet, dadurch gekennzeichnet, daß das parallellaufende Dieselaggregat (22, 24 und 23, 25) vom Netz (6) getrennt und abgeschaltet wird, daß der Turbogenerator (1) allein das Bordnetz (6) betreibt, indem die Frequenzregelung durch die Stellung der Last des Widerstands (2) über den Antiduktor (5) erfolgt, daß die Spannungsregelung vom Turbogenerator (1) allein durchgeführt wird, und daß in dieser Betriebsart bei Kurzschlüssen in Netz (6) der Netzschalter (S1) zeitverzögert erst nach länger anstehenden Kurzschlüssen öffnet.

4. Abgasturbinen-Generatoranlge nach Anspruch 1, dadurch gekennzeichnet, daß bei Vorhandensein eines Getriebesynchronwellengenerators (20) ohne Zwischenkreisumrichter (18) der Turbogenerator (1) und der Wellengenerator (7) elektrisch über Kabel (8) verbunden sind sowie gemeinsam über einen Netzschalter (S3) auf die Sammelschiene (6) speisen, und daß bei Netzstörungen der Netzschalter (S3) unverzögert öffnet und der dem Turbogenerator (1) direkt nachgeordnete Netzschalter (S1) geschlossen bleibt, während bei Störungen des Turbo-Wellengeneratorverbundes der Netzschalter (S1) unverzögert und Netzschalter (S3) zeitverzögert öffnet.

5. Abgasturbinen-Generatoranlage nach Anspruch 1, dadurch gekennzeichnet, daß der Turbogenerator (1) von einen Wellengenerator (7) frequenzmäßig geführt und beide gemeinsam durch einen Frequenzumformer (18) von der Frequenz des Netzes (6) unabhängig sind, daß bei einer vorrübergehenden Netzstörung durch Thyristorabschaltung des Netzgleichrichters oder des Wechselrichters des Umformers (18) eine Trennung des Turbo-Wellengeneratorverbundes erfolgt, ohne daß der Netzschalter (S1) geöffnet wird, und daß der Netzschalter (S1) nur bei Störungen im Turbo-Wellengeneratorverbundsystem geöffnet wird.

6. Abgasturbinen-Generatoranlage nach Anspruch 1, 2, 3, 4, oder 5, dadurch gekennzeichnet, daß der Turbogenerator (1) als permanent erregter Generator ausgeführt ist.

## Claims

1. An exhaust gas turbogenerator unit for diesel engines (19), especially for marine diesel engines with or without a shaft generator (7) as well as for combined shaft-generator-motor operation and generator operation with or without frequency-decoupled converters (18), where an excess portion of the diesel engine exhaust gases, preferably a portion not fed to a high-power turbocharger, is fed to a useful power turbine (4) which via a reduction gear drives a synchronous generator (turbogenerator) (1) which via a mains switch (51) feeds the power into a network (6) or to a synchronous generator (7) on the shaft of the diesel engine (19), and where a resistor (2) which may be energized via an antiductor (5) is provided for loading the turbogenerator (1) in the event of interruption of load from the network before the exhaust gas flap (3) is closed, characterized in that the synchronous generator (1) is separately excited, that the loading resictor (2) is so dimensioned that it is less than the nominal reactance of the turbogenerator (1), that before the turbine (4) is started and the exhaust gas flap (3) opened the generator is excited, the antiductor (5) ignited and the mains switch (S1) opened, that after the opening of the exhaust gas flap (3) the frequency of the turbogenerator (1) is - by a frequency regulation and positioning of the load current in the loading resistor (2) by the antiductor (5) - run up to that of the isolated network or of a shaft generator and synchronized via the mains switch (S1), and also a transfer of active load to the network (6) is effected by closing the antiductor (5), that in the event of temporary release of the switch because of disturbances on the network the frequency is maintained by switching on the antiductor (5) and the frequency regulation, and that after elimination of the disturbances on the network synchronization is effected again.

2. An exhaust gas turbogenerator unit as in Claim 1, characterized in that in the case of an isolated network (6) with diesel generators (22, 23) a minimum loading of the associated diesel engines (24, 25) is guaranteed because upon a drop below a minimum limit of load upon the diesel generators (22, 23) the excess power from the turbogenerator (1) is dissipated as heat in the loading resistor (2) by energizing the antiductor (5).

3. An exhaust gas turbogenerator unit as in Claim 1 or 2, where the load on the ship network is constantly below the generated turbogenerator load, characterized in that the parallel-running diesel group (22, 24 and 23, 25) is separated from the network (6) and switched off, that the turbogenerator (1) serves the ship network (6) alone by the frequency regulation being effected through the positioning of the load on the resistor (2) via the antiductor (5), that the voltage regulation is performed by the turbogenerator (1) alone, and that in this kind of operation in the event of shortcircuits in the network (6) the mains switch (S1) opens with a delay only after shortcircuits have persisted for a fairly long time.

4. An exhaust gas turbogenerator unit as in Claim 1, characterized in that where a geared synchronous shaft generator (20) is present without a converter (18) in an intermediate circuit, the turbo generator (1) and the shaft generator (7) are connected electrically via cable (8) and also feed the busbars (6) together via a mains switch (S3), and that upon disturbances occurring on the network the mains switch (S3) opens without delay and the mains switch (S1) arranged directly after the turbogenerator (1) remains closed, whilst upon disturbances occurring on the connection from the turbogenerator to the shaft generator the mains switch (S1) opens without delay and the mains switch (S3) with a time delay.

5. An exhaust gas turbogenerator unit as in Claim 1, characterized in that as regards frequency the turbogenerator (1) is led by a shaft generator (7) and both together are independent of the frequency of the network (6) through a frequency converter (18), that in the event of a temporary disturbance on the network a separation of the connection from the turbogenerator to the shaft generator is effected by switching off the network rectifier or the inverter of the converter (18) by thyristor without the mains switch (S1) being opened, and that the mains swich (S1) is only opened in the event of disturbances in the system connecting the turbogenerator to the shaft generator.

6. An exhaust gas turbogenerator unit as in Claim 1, 2, 3, 4 or 5, characterized in that the turbogeberator is executed as a permanently excited generator.

**Revendications**

1. Groupe générateur de turbine à gaz d'échappement pour moteur Diesel (19) en particulier pour moteurs Diesel de bateaux, avec ou sans alternateur de ligne d'arbre (7) ainsi que pour l'entraînement combiné de l'alternateur de ligne d'arbre par moteur et par générateur, avec ou sans convertisseur (18) découplé en fréquence, une partie excédentaire des gaz d'échappement du moteur Diesel, de préférence non acheminée vers un turbocompresseur de haute puissance, étant acheminée vers une turbine utile (4), qui entraîne un alternateur synchrone (turboalternateur) (1) par l'intermédiaire d'un motoréducteur, ledit alternateur synchrone acheminant l'énergie, par un interrupteur d'alimentation (S1), vers un réseau (6) ou vers un alternateur de ligne d'arbre synchrone (7) du moteur Diesel (19), et une résistance (2) pouvant être commandée par un antiducteur (5) (en allemand Antiduktor) étant prévue pour charger le turboalternateur (1) en cas de rupture de charge dit réseau, avant que le clapet des gaz d'échappements (3) ne se ferme, caractérisé en ce que l'alternateur synchrone (1) est excité de manière séparée,

en ce que la résistance de charge (2) est dimensionnée Je manière à être plus petite que la réactance nominale du réseau du turboalternateur (1),

en ce qu'avant la mise en marche de la turbine (4) et l'ouverture du clapet (3) des gaz d'échappement, l'alternateur est excité, l'antiducteur (5) est allumé et l'interrupteur d'alimentation (S1) est ouvert,

en ce qu'une fois le clapet (3) des gaz d'échappement ouvert, la fréquence du turboalternateur (1) est réglée, par une régulation de fréquence et un positionnement du courant de charge dans la résistance (2) de charge par l'intermédiaire de l'antiducteur (5), sur celle du réseau formant îlot ou d'un alternateur de ligne d'arbre et est synchronisée par l'intermédiaire de l'interrupteur d'alimentation (S1), de même qu'il s'opère une transmission de la charge au réseau (6) du fait de la fermeture de l'antiducteur (5),

en ce que dans le cas d'un déclenchement provisoire de l'interrupteur consécutif à des perturbations du réseau, la fréquence est maintenue du fait de la mise en marche de l'antiducteur (5) et de la régulation de fréquence, et en ce qu'une fois écartées les perturbations de réseau, une nouvelle synchronisation s'opère.

2. Groupe générateur de turbine à gaz d'échappement selon la revendication 1, caractérisé en ce que dans le ci d'un réseau formant îlot (6) les générateurs Diesel (22, 23) assurent une charge minimale des moteurs Diesel (24, 25) correspondants, du fait que lorsqu'une limite de charge minimale des générateurs Diesel (22, 23) n'est pas atteinte, l'énergie excédentaire du turboalternateur (1) est dépensée en chaleur par déclenchement de l'antiducteur (5) dans la résistance de charge (2).

3. Groupe générateur de turbine à gaz d'échappement selon la revendication 1 ou 2, dans lequel la charge du réseau embarqué est toujours inférieure à la charge générée par le turboalternateur, caractérisé en ce que le groupe Diesel (22, 24 et 23, 25) fonctionnant en parallèle est isolé du réseau (6) et arrêté, en ce que le turboalternateur (1) assure seul le fonctionnement du réseau embarqué (6), dans la mesure où la régulation de fréquence s'opère en plaçant la charge de la résistance (2) au-dessus de l'antiducteur (5), en ce que la régulation de la tension est opérée uniquement par le turboalternateur (1), et en ce que, dans le cas de courts-circuits sur le réseau (6), dans ce mode de fonctionnement, l'interrupteur d'alimentation (S1) ne s'ouvre qu'à retardement, seulement après des courts-circuits persistants.

4. Groupe générateur de turbine à gaz d'échappement selon la revendication 1, caractérisé en ce que, dans le cas de la présence d'un alternateur (20) de ligne d'arbre à transmission synchrone, sans redresseur (18) de circuit intermédiaire, le turboalternateur (1) et l'alternateur de ligne d'arbre (7) sont reliés électriquement par des câbles (8) et s'alimentent ensemble par l'intermédiaire d'un interrupteur d'alimentation (S3) sur la barrette (6), en ce que dans le cas de perturbations du réseau, l'interrupteur d'alimentation (S3) s'ouvre immédiatement, et en ce que l'interrupteur d'alimentation (S1) directement monté en aval du turboalternateur (1) demeure fermé, alors que dans le cas de perturbations du groupe du turboalternateur de ligne d'arbre, l'interrupteur d'alimentation (S1) s'ouvre immédiatement et l'interrupteur d'alimentation (S3) s'ouvre à retardement.

5. Groupe générateur de turbine à gaz d'échappement selon la revendication 1, caractérisé en ce que le turboalternateur (1) est guidé en fréquence par un alternateur de ligne d'arbre (7), les deux (alternateur) étant indépendants de la fréquence du réseau (6) grâce à un convertisseur de fréquence (18),

en ce que, dans le cas d'une perturbation provisoire du réseau, le groupe du turboalternateur de ligne d'arbre est isolé par la coupure d'un thyristor du redresseur de réseau ou de l'onduleur du convertisseur (18), sans que l'interrupteur d'alimentation (S1) ne s'ouvre,

et en ce que l'interrupteur d'alimentation (S1) ne s'ouvre que dans le cas de perturbations dans le groupe du turboalternateur de ligne d'arbre.

6. Groupe générateur de turbine à gaz d'échappement selon la revendication 1, 2, 3, 4 ou 5, caractérisé en ce que le turboalternateur (1) est conçu comme un générateur excité en permanence.

_Fig.1_

_Fig.3_

8

Fig. 2